# EUROPÄISCHE PATENTSCHRIFT

(11) **EP 1 034 077 B1**
(45) Veröffentlichungstag und Bekanntmachung des Hinweises auf die Patenterteilung: **17.07.2002**
(21) Anmeldenummer: 98966149.1
(22) Anmeldetag: 11.11.1998
(51) Int. Cl.: B32B 31/00, B29C 44/14, B32B 3/30, B32B 5/18

(54) **MEHRSCHICHTIGES PLATTENFÖRMIGES AUSKLEIDUNGSMATERIAL**
MULTILAYER PLATE-SHAPED LINING MATERIAL
MATERIAU DE REVETEMENT MULTICOUCHE SOUS FORME DE DALLE

(30) Priorität: 24.11.1997 DE 29720702 U
(43) Veröffentlichungstag der Anmeldung: 13.09.2000
(73) Patentinhaber: Benecke-Kaliko Aktiengesellschaft, D-30419 Hannover (DE)
(72) Erfinder: LODDER, Martin, D-30938 Burgwedel (DE)
(74) Vertreter: Patentanwälte Thömen & Körner
(86) Internationale Anmeldenummer: DE9803380
(87) Internationale Veröffentlichungsnummer: WO9926784

(56) Entgegenhaltungen:
- EP-A- 0 429 020
- EP-A- 0 669 195
- EP-A- 0 713 759
- DE-A- 3 842 846
- DE-A- 4 024 274
- DE-A- 19 619 892

## Beschreibung

Die Erfindung befaßt sich mit einem mehrschichtigen plattenförmigen Auskleidungsmaterial, welches zuschnittfähig ist. Derartige Auskleidungsmaterialien werden beispielsweise als Bodenplatten als Abdeckung von Ladeflächen bei Nutzfahrzeugen sowie auch bei PkW's verwendet. Das Auskleidungsmaterial ist zuschnittfähig, kann also z. B. gestanzt werden, um eine der Ladefläche entsprechende Flächenform zu erhalten.

Eine bekanntes Auskleidungsmaterial, welches als Bodenplatte verwendet wird, besteht auf seiner unteren Seite aus einer Holzfaserplatte. Auf die Holzfaserplatte ist ein Verbundmaterial geklebt, welches aus einer TPO-Kompaktfolie (TPO = thermoplastische Polyolefine) mit einem aufkaschierten Vlies besteht. Insgesamt umfaßt das Auskleidungsmaterial also drei Schichten.

Der Aufbau des bekannten Auskleidungsmaterials ist kompliziert, denn zum einen muß auf die TPO-Kompaktfolie ein Vlies aufkaschiert werden, und zum anderen muß die Holzfaserplatte mit dem aus der TPO-Kompaktfolie und dem Vlies bestehenden Verbundmaterial beklebt werden. Dadurch wird die Herstellung sehr kostenintensiv. Außerdem besitzt das fertige Auskleidungsmaterial insbesondere wegen der verwendeten Holzfaserplatte ein hohes Gewicht. Ferner ist auch die Geräuschdämmung unbefriedigend und schließlich bereitet die Entsorgung einer alten nicht mehr benötigten Bodenplatte Probleme, weil sie aus unterschiedlichen Materialien besteht.

EP-A-0 713 759 definiert ein mehrschichtiges, plattenförmiges, tiefgezgenes Warmformteil aus Polypropylen mit einer direkt anliegenden PP-Partikelschaumschicht. Auch in EP 669 195, DE 19 619 892, DE 4 024 274, DE 3 842 846 werden Formkörper aus Verbundmaterial von Trägermaterial mit Polymer-Partikelschaum beschriebe.

Der Erfindung liegt die Aufgabe zugrunde, ein leichtes und gleichwohl robustes Auskleidungsmaterial zu schaffen, welches kostengünstig hergestellt werden kann. Außerdem soll das Auskleidungsmaterial eine gute Geräuschdämmung besitzen und leicht einem Recycling zugeführt werden können.

Die Lösung dieser Aufgabe erfolgt durch die Merkmale des Patentanspruchs 1.

Erfindungsgemäß ist das Auskleidungsmaterial durch eine auf einer Trägerschicht fest angeordnete tiefgezogene TPO-Folie gebildet, wobei die Trägerschicht aus PP-Partikelschaum besteht. Ein solches Auskleidungsmaterial ist robust und stabil und besitzt dennoch nur ein geringes Gewicht. Die Herstellung läßt sich einfach und somit kostengünstig realisieren.

Gemäß der Erfindung besteht das Auskleidungsmaterial aus der tiefgezogenen TPO-Folie, die nach dem Tiefziehen mit dem PP-Partikelschaum hart hinterschäumt ist.

Dabei ist es von Vorteil, daß sich die Herstellung auf nur einen Arbeitsgang reduzieren läßt und besonders einfach und kostengünstig ist, denn das Tiefziehen und Hinterschäumen können in einem Werkzeug erfolgen. Irgendwelche gesonderten Klebevorgänge sind nicht erforderlich.

Eine weitere zweckmäßige Ausgestaltung der Erfindung besteht darin, daß die TPO-Folie haftend über eine unter Temperatureinwirkung hergestellte Klebeverbindung mit der Trägerschicht verbunden ist. Durch einfaches Verpressen über die gesamte Fläche sowie unter Temperatureinwirkung läßt sich somit in einfacher Weise das zweischichtige Auskleidungsmaterial herstellen.

Die TPO-Folie besitzt eine strukturierte Oberfläche. Dies läßt sich in einfacher Weise dadurch erreichen, daß die TPO-Folie im Werkzeug beim Tiefziehen geprägt wird, wodurch eine strukturierte Oberfläche entsteht.

Die Erfindung sieht vor, daß sowohl in der TPO-Folie als auch in dem PP-Partikelschaum TPO-Recyclate (auch als TPO-Regenerate bezeichnet) enthalten sind.

Solche TPO-Reclyclate stehen als Abfallprodukte praktisch kostenlos zur Verfügung, und statt diese Abfallprodukte zu entsorgen, können sie in vorteilhafter Weise zur Erzeugung von Auskleidungsmaterialien herangezogen werden.

Ein derartiges Auskleidungsmaterial bildet somit ein Produkt, das aus einer Werkstoffklasse gefertigt ist, und ein solches Produkt läßt sich wesentlich leichter recyceln als das eingangs beschriebene bekannte Auskleidungsmaterial.

Eine weitere Ausgestaltung der Erfindung besteht darin, daß auf die TPO-Folie auf der oberen Seite eine dünne genarbte farbige Deckfolie aus einer TPO-Frischmischung laminiert ist. Dadurch ist es möglich, der Oberfläche des Auskleidungsmaterials einen vom Anwender gewünschten Farbton zu geben.

Anhand des in der Zeichnung dargestellten Ausführungsbeispiels wird die Erfindung nachfolgend näher erläutert. Es zeigen:
- Fig. 1: eine Draufsicht auf einen Teil eines Auskleidungsmaterials in Form einer Bodenplatte, und
- Fig. 2: eine Querschnittsansicht des Auskleidungsmaterials gemäß Fig. 1.

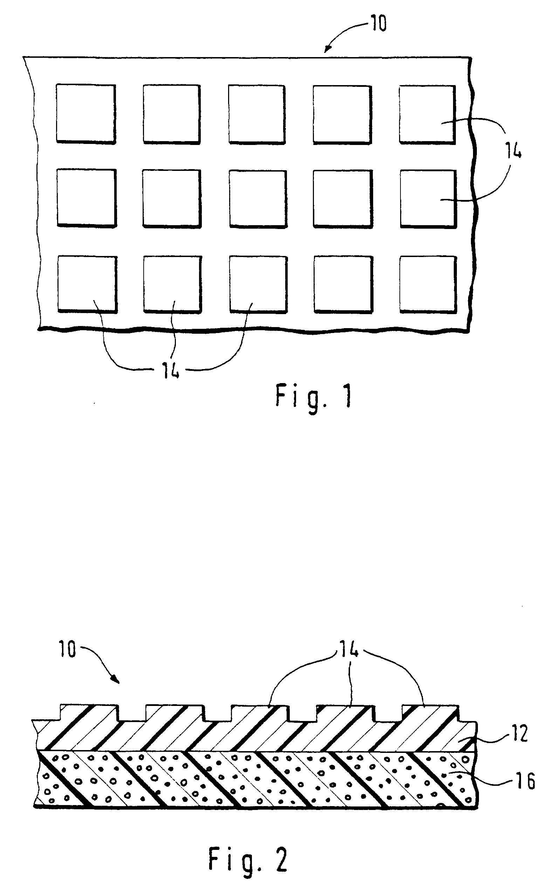

In der Zeichnung ist in Fig. 1 und Fig. 2 ein Auskleidungsmaterial als Bodenplatte 10 dargestellt, die als Abdeckung einer Ladefläche in einem Nutzfahrzeug dienen kann. Die Bodenplatte 10 besteht aus einer oberen TPO-Folie 12 und einer unteren PP-Partikelschaumschicht 16. Die TPO-Folie 12 ist in einem Werkzeug tiefgezogen und anschließend mit dem PP-Partikelschaum 16 hart hinterschäumt worden.

Wird Während des Tiefziehens der TPO-Folie 12 diese im Werkzeug geprägt, um eine strukturierte Oberfläche zu erhalten. In der Zeichnung wird die strukturierte Oberfläche durch quadratische Erhebungen 14 gebildet.

Sowohl in der TPO-Folie 12 als auch in der PP-Partikelschaumschicht 16 wird TPO-Recyclat verwendet, so daß die Bodenplatte 10 insgesamt aus einer Werkstoffklasse gefertigt ist und somit leicht recycelt werden kann.

Das Herstellungsverfahren der Bodenplatte 10 kann in vorteilhafter Weise auf einen Arbeitsgang reduziert werden, denn das Tiefziehen und Hinterschäumen können in einem Werkzeug erfolgen.

## Patentansprüche

1. Mehrschichtiges plattenförmiges Auskleidungsmaterial, welches zuschnittfähig ist, insbesondere Bodenplatte als Abdeckung einer Ladefläche von Nutzfahrzeugen oder von Pkws, **dadurch gekennzeichnet, daß** das Auskleidungsmaterial (10) durch eine auf einer Trägerschicht (16) fest angeordneten tiefgezogenen TPO-Folie (12) (TPO = Thermoplastische Polyolefine) gebildet ist, daß die Trägerschicht (16) aus PP-Partikelschaum (PP = Polypropylen) besteht, daß die das Auskleidungsmaterial (10) bildende tiefgezogene TPO-Folie (12) nach dem Tiefziehen mit dem PP-Partikelschaum (16) hart hinterschäumt ist, daß die TPO-Folie (12) eine durch Prägung der TPO-Folie (12) beim Tiefziehen erzeugte strukturierte Oberfläche (14) besitzt, daß sowohl die TPO-Folie (12) als auch der PP-Partikelschaum (16) TPO-Recyclate ententhalten und somit eine gemeinsame Werkstoffklasse bilden, und daß auf die TPO-Folie (12) auf der der PP-Partikelschaumschicht abgewandten Seite eine farbige Deckfolie aus einer TPO-Frischmischung laminiert ist.

2. Auskleidungsmaterial nach Anspruch 1, **dadurch gekennzeichnet, daß** die TPO-Folie (12) haftend über eine unter Temperatureinwirkung hergestellte Klebeverbindung mit der Trägerschicht (16) verbunden ist.

3. Auskleidungsmaterial nach Anspruch 1 und/oder 2, **dadurch gekennzeichnet, daß** die Deckfolie genarbt ist.

## Claims

1. Multi-layer, sheet-form lining material, which is capable of being cut to size, in particular a floor covering for commercial vehicle or car loading areas, **characterised in that** the lining material (10) takes the form of a thermoformed TPO film (12) (TPO = thermoplastic polyolefins) arranged fixedly on a backing layer (16), **in that** the backing layer (16) consists of PP particle foam (PP = polypropylene), **in that** the thermoformed TPO film (12) forming the lining material (10) is rigidly foam-backed with the PP particle foam (16) after thermoforming, **in that** the TPO film (12) has a textured surface (14) produced by embossing of the TPO film (12) during thermoforming, **in that** both the TPO film (12) and the PP particle foam (16) contain recycled TPO and thus form a common class of materials and **in that** a coloured top film of a virgin TPO mixture is laminated onto the TPO film (12) on the side remote from the PP particle foam layer.

2. A lining material according to claim 1, **characterised in that** the TPO film (12) is connected to the backing layer (16) adhesively via a bonded joint produced under the action of heat.

3. A lining material according to claim 1 and/or 2, **characterised in that** the top film is grained.

## Revendications

1. Matière de revêtement multicouche en forme de dalle pouvant être découpée, en particulier, dalle de plancher servant de revêtement à la surface de charge de véhicules utiles ou de voitures particulières, **caractérisée en ce que** la matière de revêtement (10) est formée par une feuille de polyoléfines thermoplastiques emboutie (12) disposée de manière fixe sur une couche porteuse (16), que la couche porteuse (16) est en mousse de particules de polypropylène, que la feuille de polyoléfines thermoplastiques emboutie (12) formant la matière de revêtement (10) est pourvue sur sa face arrière d'une mousse dure de particules de polypropylène (16), après avoir été emboutie, que la feuille de polyoléfines thermoplastiques (12) possède une surface structurée (14) produite par gaufrage de la feuille de polyoléfines thermoplastiques (12) lors de l'emboutissage, que non seulement la feuille de polyoléfines thermoplastiques (12), mais aussi la mousse de particules de polypropylène (16), contiennent un produit de recyclage de polyoléfines thermoplastiques et qu'elles forment, par conséquent, une classe de matériaux commune et que,- sur la face de la feuille de polyoléfines thermoplastiques (12) opposée à la couche en mousse de particules de polypropylène, est laminée une feuille de recouvrement colorée constituée d'un mélange neuf de polyoléfines thermoplastiques.

2. Matière de revêtement suivant la revendication 1, **caractérisée en ce que** la feuille de polyoléfines thermoplastiques (12) est reliée de manière adhésive à la couche porteuse 16, au moyen d'un assemblage collé réalisé sous l'influence de la température.

3. Matière de revêtement suivant les revendications 1 et/ou 2, **caractérisée en ce que** la feuille de recouvrement est grainée.
